# EUROPEAN PATENT SPECIFICATION

(11) **EP 1 691 966 B1**
(45) Date of publication and mention of the grant of the patent: **13.08.2008**
(21) Application number: 04814447.1
(22) Date of filing: 10.12.2004
(51) Int. Cl.: B29C 49/66, B29C 49/22, B29C 49/04

(54) **A PROCESS FOR MAKING COSMETIC CONTAINERS HAVING A TRANSPARENT THERMOPLASTIC OUTER WALL**
VERFAHREN ZUR HERSTELLUNG VON MAKEUP-BEHÄLTERN MIT DURCHSICHTIGER THERMOPLASTISCHER AUSSENWAND
PROCEDE D'ELABORATION DE CONTENANTS DE COSMETIQUES A PAROI EXTERNE THERMOPLASTIQUE TRANSPARENTE

(30) Priority: 10.12.2003 US 734047
(43) Date of publication of application: 23.08.2006
(73) Proprietor: E.I. DU PONT DE NEMOURS AND COMPANY, Wilmington DE 19898 (US)
(72) Inventor: KWON, Hyuk, Tark, Seoul 158-076 (KR)
(74) Representative: Morf, Jan Stefan
(86) International application number: PCT/US2004/042265
(87) International publication number: WO 2005/058582

(56) References cited:
- EP-A- 0 919 355
- WO-A-20/04062881
- US-A- 4 857 258
- US-A1- 2002 175 136
- DUPONT: "Surlyn gives make-up sticks a glass-like shine and excellent scratch resistance" INTERNET ARTICLE, [Online] November 2003 (2003-11), XP002323435 Retrieved from the Internet: <URL:www.dupont.com/packaging/news/pkgnews 0312.html> [retrieved on 2005-04-05]
- PATENT ABSTRACTS OF JAPAN vol. 008, no. 054 (M-282), 10 March 1984 (1984-03-10) & JP 58 208021 A (KIYOORAKU KK), 3 December 1983 (1983-12-03)
- PATENT ABSTRACTS OF JAPAN vol. 2000, no. 02, 29 February 2000 (2000-02-29) & JP 11 314269 A (TOYO SEIKAN KAISHA LTD), 16 November 1999 (1999-11-16)
- PATENT ABSTRACTS OF JAPAN vol. 1998, no. 05, 30 April 1998 (1998-04-30) & JP 10 006391 A (KAO CORP), 13 January 1998 (1998-01-13)
- PATENT ABSTRACTS OF JAPAN vol. 2000, no. 14, 5 March 2001 (2001-03-05) & JP 2000 313057 A (TOYO SEIKAN KAISHA LTD), 14 November 2000 (2000-11-14)

## Description

### BACKGROUND OF THE INVENTION

### Field of the Invention

The invention relates to a method for producing cosmetic containers that have an outer wall of a clear plastic with a thickness of 1 to 5 mm, wich gives the appearance of smooth glass. This invention particularly relates to a method for producing such containers.

### Description of Related Art

In the sale of cosmetics, toiletries, and perfumes, it is often preferred to use glass containers rather than plastic containers for various reasons. One reason that glass can be preferred is that glass is sturdier than most plastics. Glass is difficult to scratch or mar on its surface, while plastics can be relatively easy to scratch or scuff. Imperfections on the surface of a container can cause a perception of poor quality, and this perception can be transferred to the product. Glass can also be shaped to give an appealing look to the container on the shelf while still maintaining its ability to resist scarring. The transparency of glass can also be aesthetically appealing to a consumer, and give the packaging designer a number of options to utilize the appearance of the product inside the container to draw the attention of the consumer. Glass also offers the option of using various colored glasses. One other important advantage of glass containers is that they are very resistant to attack by the products stored inside of them.

Use of glass containers is not trouble-free, however. Glass can be relatively expensive to use, and in some products its cost can be prohibitive. Glass is generally more dense than plastic, and thus a glass container of identical size to a plastic container will weigh more than the plastic container, and thus shipping costs can be increased. In addition, while glass is resistant to knicks and scratches on its surface, glass is brittle and can break more readily than most plastic containers. Colored glass can also be expensive to the manufacturer. Therefore, it can be desirable to replace glass containers with plastic containers in at least some applications.

Use of plastic containers in packaging is well known, and such containers are commercially available. Polyolefins and polyesters find use as packaging for foods and beverages, for example. Finding transparent plastic materials that can be used to replace glass in some applications is not without problems, however. While a number of clear thermoplastic materials are known that can be used as replacements for glass as container materials at least in terms of their physical properties, the aesthetic properties of transparency, clarity, and distinctness of image (DOI) of glass containers often cannot be reproduced in their plastic counterparts. One problem in this regard is that in order to give a glass-like appearance a plastic container requires a relatively thick wall of clear plastic. Conventional processes for production of plastic containers cannot produce a container having the proper thickness, while maintaining the clarity and transparency of the plastic. The plastic layer often becomes clouded, or has non-uniform transparency/clarity, or has surface imperfections which can negatively affect the DOI. In addition, not many thermoformable plastics can mimic the transparency of glass while at the same time delivering resilience and resistance to marring similar to glass. Finally, not all plastic materials are compatible with the products being placed in them. Products containing solvents or other chemicals cause chemical degradation of the packaging material over time, if the packaging material is not carefully selected to avoid this problem.

Thick wall PET (polyethylene terephtalate) bottles can be obtained by injection or stretch blow molding (Cosmetic Packaging and Design, September/October 2002, www.CosmeticPackagingandDesign.com). The injection or stretch molding process currently used to manufacture thick wall plastic containers can require a special PET resin, which can result in higher costs of manufacture relative to use of conventional thermoplastic resins. U.S. Pat. No. 4,079,850 describes a co-extrusion blow-molding process. One problem with co-extrusion blow-molding is that the layers of the container may not be continuous, or give the appearance of being continuous, when the layers comprise dissimilar polymers.

In a newsrelease obtainable under http://www.dupont.com/packa-ing/news/pkgnews0312.html, reference is made to a multilayer container made by a conventional coextrusion blow molding process having a transparent outer layer with a shiny glass-like appearance.

US 2002/0175136 describes a thick-walled cosmetic container made by over-molding a resin body on a thin-walled glass or metal bottle. This document does not pertain to coextrusion blow molding processes.

### SUMMARY OF THE INVENTION

In one aspect, the present invention is a process for manufacturing a multilayer container having a transparent outer layer around the periphery of the container, wherein the outer layer comprises a clear thermoplastic polymer material that is transparent in the solid state, and at least one other inner layer, and wherein the transparent outer layer has a thickness ranging from 1.0 mm to 5.0 mm, the process comprising the steps:
(1) heating each of at least two thermoplastic polymers to a temperature above the melt temperature of each to obtain a melt of each of the at least two polymers;
(2) co-extruding the at least two thermoplastic polymers through a co-extrusion blow molding head into an open mold;
(3) using an extrusion blow molding machine to blow mold the at least two thermoplastic polymeric materials to form a blow molded structure having an internal (inside) surface and an external (outside) surface, wherein the blow molding machine comprises (i) a first head for extruding a first thermoplastic polymer that is to be used as the outer layer, and at least a second head for extruding at least one additional polymer, wherein at least the first head extrudes a homogeneous and gel-free melt of the first thermoplastic polymer; (ii) (a) a mold comprising a first cooling means for cooling the outside of the blow molded structure and (b) a second cooling means for cooling the inside of the blow molded structure as it is blow molded; (iii) a pinch off area and a dual pinching means for pinching off the blow molded structure and obtaining a blow molded structure having a continuous transparent outer layer around the periphery of the container;
(4) blow molding the extruded polymers (parison) to form a multilayer blow molded structure; and,
(5) using the first and second cooling means to cool the inside and outside of the blow molded structure to a temperature below 22°C, while forming the blow molded structure.

### DETAILED DESCRIPTION OF THE INVENTION

In one embodiment, the present invention is a process for manufacturing a multilayer cosmetic container having an outer layer with a thickness of 1 to 5 mm that has clarity and distinctness of image (DOI) which is identical or similar to glass. By DOI it is meant that the surface of the container is relatively free of imperfections that can cause a refraction pattern in light reflected from the surface of the container. The DOI can be described as the ability of a surface to act as a mirror. The clarity, or distinctness, of a mirrored image is a measure of the DOI of a particular surface. The clearer the image of such a mirrored reflection, the higher the DOI and the more mirror-like the surface. To obtain high DOI in extrusion blow molding typically, or conventionally, a combination of selection of polymer and proper mold will yield satisfactory results. For example, some polymers are not considered as useful in applications where high DOI is a requirement. Polypropylene, polyethylene, and polyoxymethylene polymers are examples of polymers that would not be expected to yield products having surfaces that exhibit high DOI.

In the practice of the present invention, useful polymers which can be used to prepare parts with high DOI can be thermoplastic polymers that are known to produce parts that have good clarity. For example, polycarbonates, acrylic polymers, polyesters such as polyethylene terephthalate cyclohexanedimethanol copolymers, amorphous nylon polymers, styrene/acrylonitrile (SAN) copolymers, and copolymers of ethylene and unsaturated carboxylic acids that are at least partially neutralized (ionomers) are examples of polymers that can be suitable for use herein. Some polymers may be considered more or less preferable for use herein, depending on the specific application. For example, polycarbonate can have problems with chemical resistivity, and thus may not be suitable in an application where it can have prolonged contact with chemicals that can affect its appearance. Acrylics can be brittle, or have problems with impact resistance. The selection of the polymer, therefore, should be dependent upon the application intended for the container produced. It is preferable that a polymer used to package "aggressive" materials -- that is that can chemically break down its container -- be resistant against many of the chemicals commonly used in the particular applications considered. One particularly preferred family of polymers are the ionomers obtained from neutralization of ethylene/(meth)acrylic acid copolymers. These polymers are known and can be purchased commercially, notably from E.I. du Pont de Nemours and Company, under the tradename of Surlyn^{®}.

Conventional practice for obtaining articles having high DOI can include the use of a mold that is polished, and substantially free of surface imperfections. However, it is surprising that the process of the present invention does not require a polished mold to produce parts having a high DOI. In fact, the mold can have a roughened surface and still produce an article of the present invention having an acceptably high DOI. ln some aspects, using a roughened mold can be preferable to using a polished mold, for processing reasons unrelated to DOI such as removing the article from the mold, for example.

The outermost layer of a container of the present invention comprises a clear, thermoplastic first polymer that is either directly or indirectly bonded to at least one other polymer layer that forms the innermost layer of the multilayer container.

By "directly bonded", it is meant that there is no intervening material layer between the clear outermost polymer layer and the innermost polymer layer. By "indirectly bonded", it is meant that there is at least one intervening material layer between the clear outermost polymer layer and the innermost polymer layer. The at least one intervening layer can be at least one adhesive layer, or at least one other polymer layer, or a combination of adhesive and polymer layers.

By "continuous" it is meant that the sight line of the outermost transparent layer is substantially uninterrupted around the periphery of the container, such that the adjacent polymer layer does not visually disrupt the perception of uniformity of the transparent outermost layer. In this manner, the outermost layer imparts a smooth, glass-like appearance to the container.

By "smooth, glass-like appearance", for the purposes of the present invention, it is meant that the transparent outer layer is free of distortions that can result in the container having the appearance of flawed (dimples and pock marks, for example) or distorted (ripples or waves, for example) glass. Containers having a glass-like appearance, for the purposes of the present invention, also include containers produced using the process of the present invention and having surfaces with high DOI. DOI can be determined according to known test methods.

The outermost layer can be colored, but it can also be suitable for use if it is colorless. The thickness of the outermost layers is 1.0 mm , and up to 5 mm thick or any intervening thickness within the range. Below a thickness of about 1.0 mm, the process described herein may not be required to obtain a cosmetic container having the appearance described herein, although the process can be used for such containers. It can be preferred in some applications that the outer layer is at least 1.5 mm thick or any thickness in the range up to 3.5 mm. In some applications, the thickness of the outermost layer can be at least 2.0 mm thick, or at least 2.5 mm thick, up to a thickness of 3.0 mm. Any thickness that is within the range described herein is contemplated as within the scope of this invention. The appropriate or desired thickness for a given type of container made according to the process of the present invention can be determined on a case by case basis, based upon a number of criteria to be applied by the manufacturer or end user. The thickness of a transparent layer in any individual container can deviate from the desired average thickness without departing from what is contemplated as the invention described herein. It can also be desirable to intentionally vary the thickness of the outer transparent layer in any given region of the container, subject only to the limitations of the process described herein. These variations ― as well as others that are not specifically set out herein but considered within the abilities of one of ordinary skill in the art to produce given the disclosures of the present application ― are all contemplated as within the scope of the present invention.

The outermost layer can be any thermoplastic polymer that is transparent in the solid state and having a melt index (MI) which will allow the polymer to be used in the process described herein. Generally, the melt strength, which is a combination of low MI and high melt elasticity, should be sufficiently high such that the melt of the polymer used as the outer transparent polymer has sufficient cohesive strength to be extrusion blow molded.

Suitable thermoplastic polymers useful as an outermost layer in the practice of the present invention are selected from thermoplastic polymers that are transparent in the solid state. Such polymers can be selected from polymers in the group consisting of: polyesters; polycarbonates; polyurethanes; polyacetals; acrylic polymers; SAN; copolymers, which can include terpolymers, of ethylene and alpha, beta-unsaturated carboxylic acids and/or acid derivatives such as unsaturated carboxylic acid salts, unsaturated carboxylic acid esters, and/or unsaturated carboxylic acid anhydrides for example; polyamides; and polyvinyl chlorides. As used herein, the phrase "copolymers of" shall be taken to mean "copolymers obtained by copolymerization of". For example, the phrase "copolymers of ethylene and an unsaturated carboxylic acid" shall mean "copolymers obtained by copolymerization of ethylene and an unsaturated carboxylic acid." Blends or combinations of any of the thermoplastic polymers described herein can also be suitable for use in the practice of the present invention. As used herein, the term "outer layer" does not preclude the use of a thin coating of another material over the outer layer, perhaps to enhance surface gloss or mar resistance, for example. Such a coating, if used, should be present only as a very thin coating layer, and should not be readily perceptible to the unaided eye as a layer which is distinct from the outer transparent polymer layer.

Other thermoplastic polymers useful as a second polymer layer can be selected from any known polymeric material that can be co-extrusion blow molded with the first polymer, and can be bonded to the outermost layer either directly or by using an adhesive. To be suitable for use herein, the second polymer should also in some instances be resistant to solvents and/or non-toxic, depending on the application and use envisioned for the container. The second polymer can comprise a colorant. Suitable polymers for use as a second polymer can be selected from the group consisting of: polyolefins such as polyethylenes and/or polypropylenes, including metallocene polyethylenes; polyesters; polycarbonates; polyurethanes; polyacetals; polyacrylates; copolymer ionomers; polyamides; ethylene/vinyl acetates; and polyvinyl chlorides.

The inner layer can be chosen such that it imparts chemical resistivity to the container, so that a product can be charged to the container and isolated from the transparent outer layer. Polyolefins can be particularly suitable for this purpose, but the present invention is not limited to the use of a polyolefin as the innermost layer. As noted hereinabove, the outer layer can have thickness variations within any given container or type of container. It is in keeping with the invention as described herein that the inner layer can have either uniform or varying degrees of thickness, as desired by the container designer to produce particular visual effects, or as required to impart particular physical properties to the container, or as a result of a process condition, or any other condition or circumstance, as the case may be. In any event, in a multilayer container of the present invention, the inner layer has a definitive, articulated border with the clear transparent outer layer such that the interface between the transparent layer and the adjacent inner layer can be visually detected. In a particularly preferred embodiment of the present invention, the transparent outer layer is a continuous layer, that is, it is uninterrupted by any of the additional other layers, about the periphery of the container.

A continuous outer layer can be obtained in the practice of the present invention by, for example, using a dual pinching means which is symmetrical, and which pushes the parison up and in towards the internal cavity of the container, thus forming a substantially flat bottom, or a bottom wherein the joint ― or pinch-off point ― is at least slightly convex. Other means of obtaining a continuous outer layer in an extrusion blow molding process are also contemplated by the present invention.

The process of the present invention is a co-extrusion blow molding process. Co-extrusion blow molding is a conventionally practiced process whereby at least two polymers are melted (that is, heated to the point that they can flow to mold) and are then co-extruded to form a parison in an open mold.

In the process of the present invention there is provided a means for improving the homogeneity of any or all of the melted polymers as they are co-extruded. Any means that can reduce, minimize, or eliminate gels from at least the first polymer as it is extruded to form the parison is suitable for use herein. As used herein, "gels" refers to spherulites, or regions of "unmelted" or "undissolved" polymer. That is, as used herein gels are,agglomerated regions of polymer which remain crystalline or semi-crystalline within the otherwise amorphous polymer melt. As used herein, a homogeneous melt is a gel-free melt and the presence of gels defines a heterogeneous melt. Extruding a heterogeneous melt can be detrimental to producing a transparent, glass-like appearance in a polymer layer. A heterogeneous melt can also cause distortions such as ripples, which result from uneven polymer flow, and can be undesirable in any layer of a container of the present invention.

Preferably, each of the extruded polymers is extruded as a homogeneous melt. The means for improving the homogeneity can comprise, for example, an improved heating means for more effective distribution of heat throughout the polymer either before or during extrusion. In addition to, or alternative to, a means for improving heat distribution throughout the polymer, the means for improving homogeneity in the extruded polymer melt can comprise a more effective mixing means, or higher shear.

In the practice of the present invention, one means for improving the homogeneity of the extruded polymers is to modify the extrusion heads (heads) to make them more effective in reducing; minimizing, or eliminating gels. Other means for obtaining a homogeneous polymer melt can be suitable for use in the practice of the present invention, and are contemplated as within the scope of the present invention.

It is known conventionally in co-extrusion blow molding processes to choose layers of polymers such that the polymers have a good viscosity match in the melt. A good viscosity match is desirable to ensure that the polymeric layers have similar melt flow characteristics. One of ordinary skill in the art of co-extrusion blow molding would know how to select materials which would give such a good match.

In a conventional process the polymer or polymers used in a blow molding operation are extruded into an open mold which comprises a cooling means, which is then closed around the extruded polymers (parison) as an air inlet allows pressurized air into the parison, which forces the polymer melt to take the shape of the mold. In a conventional process the mold is kept cool, that is at a temperature below the glass transition temperature of the polymer melt, such that the polymer sets rapidly in the mold to take the shape of the mold. The rate of cooling can effect the transparency of an extruded polymer, that is, rapid cooling can promote transparency and relatively slow cooling can promote a hazy appearance.

In addition to extruding a homogeneous melt to improve transparency in a container of the present invention, the process of the present invention comprises a step whereby the parison can be cooled directly on its inside surface using a second cooling means. The second cooling means introduces a cooling element for quickly dropping the temperature of the inside surface to a point below its glass transition temperature. The rate of cooling at the inside surface of the parison, as the present invention is practiced, is faster than the rate of cooling without the second cooling means. In the practice of the present invention, the first and second cooling means are used to lower the temperature of the extruded polymers to below 22°C, preferably below 20°C, and more preferably below 18°C. Most preferably, the temperature of the extruded polymer is lowered to less than 15°C.

The second cooling means can be cold pressurized gas that is blown, or discharged, into the parison through the blowing pin, for example: The gas can be any gas that can be purchased commercially in pressurized cylinders, with the proviso that the gas is considered non-reactive with and/or non-destructive to the polymers or the process equipment. For example, the gas can be: air or any of its individual components; "inert" gases such as helium, neon, argon; or mixtures of any of these gases. In addition to the mold, the cooling means provides a second source of cooling for the extruded polymers. Without being held to theory, efficiently cooling the polymer melt by using at least a second cooling means helps in obtaining a transparent container of the present invention by quickly and effectively lowering the temperature of the polymer while still in a homogeneous state, rather than using an inefficient cooling process which may allow rapid cooling in one region and slow cooling in another region, and thereby cause haze in the article produced. The gas is preferably discharged at any temperature at or below 20°C, and most preferably at any temperature at or below 5°C.

It is preferable that the outer transparent layer be an ethylene copolymer ionomer. It is known that the clarity of an ionomeric layer can depend on factors such as the acid level, the percent neutralization, and the type of metal salt in the ionomer. These are also contemplated herein as factors which could affect the transparency of the outer layer.

A further improvement to the extrusion blow-molding process in the process of the present invention is use of a dual pinching means for pinching off the excess polymer from opposite sides in the mold. In this way, the outer polymer layer pushes the inner polymer layer up and away from the pinched edge, toward the inner cavity of the molded structure, giving the peripheral layer a transparent appearance that is continuous. Use of this pinching means can be optional dependent upon the design of the container being produced.

In another embodiment, the present invention is a multilayer container in accordance with claim 15. An container of the present invention is a container for cosmetics or personal care items. Cosmetic containers are generally small containers relative to other types of containers, such as those holding food or beverages for example. The cosmetic industry is also very concerned with the image of the container, and whether the container provides the proper aesthetic quality for the product being sold. As such, the design of a cosmetic container is often unique relative to other types of containers, and can present manufacturing challenges that are unique relative to other types of containers. In any event, various shapes and sizes can be desirable in a cosmetic container, and each shape can require careful implementation of the process. For the purposes of the present invention, a cosmetic is a product that is sold for external application to the skin for cosmetic reasons, or aesthetic reasons rather than medicinal purposes or nutritional purposes, or other functional purposes. Cosmetics as defined herein can include, for example, mascara, lipstick, eye liner, facial powder, lip gloss, fingernail polish, perfumes, colognes, lotions, make-up, and foundation. The list is not.a complete listing of all types of cosmetics, and one skilled in the art of manufacturing cosmetics would know other cosmetics that could be included on the list.

The container of the present invention is a container for a cosmetic product wherein the container has a transparent outer layer that is formed from any of the polymers described as suitable for use in the process of the present invention. Most preferable are articles having an ionomer outer layer. The thickness of the outerlayer is between 1 mm and 5 mm.

The manufacturing means useful for the present invention is an extrusion blow-molding machine that has been modified to produce the results described herein. A first modification is to the extrusion heads. The extrusion heads can be modified by any conventional or non-conventional means that will enable a polymer to be extruded which is gel-free. For example, a flow inverter can be used. Flow inverters are conventional and known to one of ordinary skill in the art of extrusion blow-molding. Alternatively, the extrusion head can be modified to have increased shear in the head, so that mixing is more effective in the region of the head as the polymer is extruded.

Another modification to the manufacturing means is to the blow-pin, which is the outlet for the pressurized gas used to blow the blow-molded structure. Conventional blow-pins are cooled over a portion of the pin to lower the temperature of the gas blown into the parison. The blow-pin of the present invention is be modified so that the blow-pin is cooled over at least 90%, preferably 95%, and most preferably essentially 100% of the blow-pin area, not inclusive of the nozzle that fits into the parison opening. A second modification to the blow pin can include at least one exit, for example a channel which is cut into the blow-pin nozzle, to allow escape of gas from the parison. This can allow for more effective heat transfer between the cold gas and the surface of the parison, rather than between cold gas and gas that has been heated by the parison. Still another modification to the blow-pin is to provide a nozzle having a roughened surface.

Still another modification to the manufacturing means is to include a symmetrical pinch-off means in the pinch-off area. This modification can facilitate the formation of a transparent layer that is continuous around the periphery of the article.

Optionally, the mold can also be modified so that the cooling channels that are conventionally included are closer to the surface of the mold to provide better heat transfer with the parison.

### EXAMPLES

The examples are presented by the Applicant to illustrate the invention, and should not be used to arbitrarily limit the present invention.

### Example 1

An extrusion blow molding machine was modified so that the blowing pin, which was 360 mm in length, had a cooling jacket which extended 300 mm over its length, such that the cooling jacket essentially covered the entire area of the blow pin that is not inserted into the parison during the blow molding process. A second modification to the blow pin was made to provide a grooved channel on the outside of the nozzle. Both heads of the extruder were modified so that the polymers that were passed through the heads were subjected to increased shear to eliminate gels in the extruded polymer. The temperature of the cooling fluid (water/glycol) in the cooling jacket of the blowing pin was lowered to -4°C. The mold of the blow molding machine was modified so that the cooling channels in the mold were nearer to the surface of the mold, relative to the normal mold. The coolant flowing through the cooling channels of the mold was maintained at 5°C (±1°C). The polymers (Surlyn^{®} 8920 for the outer layer (available from E. I. du Pont de Nemours and Company) and PP 520 (available from Honam Petrochemical)) were dried according to the manufacturers specifications prior to feeding to the extruders. The Surlyn^{®} was heated to a temperature in the range of 160°C to 180°C and the polypropylene was heated to a temperature in the range of 160°C to 170°C. The heads were both maintained at a temperature in the range of 160°C to 180°C, and the die temperature was 160°C. The blowing pin used an air supply to blow air at a pressure of 3 to 5 kPa, and at a temperature of from -5°C to 5°C. Surlyn^{®} and polypropylene were fed to the extruder and to the die in a weight ratio of 9:1. The outer layer (Surlyn^{®}) of the square container was transparent, having a thickness of about 3.5 - 4.0 mm.

### Example 2

The process of Example 1 was repeated except that polyethylene was used instead of polypropylene, to yield a transparent, glossy bottle having an outer Surlyn^{®} layer of about 3.5 - 4.0 mm thickness.

### Comparative Example 1

The same procedure as in Example 1 was followed, except that the process was carried out on non-modified extrusion equipment. The bottle produced did not have a glossy transparent appearance.

## Claims

1. A process for manufacturing a multilayer container having a transparent outer layer around the periphery of the container, wherein the outer layer comprises a clear thermoplastic polymer material that is transparent in the solid state, and at least one other inner layer, and wherein the transparent outer layer has a thickness ranging from 1.0 mm to 5.0 mm, the process comprising the steps:
(1) heating each of at least two thermoplastic polymers to a temperature above the melt temperature of each to obtain a melt of each of the at least two polymers;
(2) co-extruding the at least two thermoplastic polymers through a co-extrusion blow molding head into an open mold;
(3) using an extrusion blow molding machine to blow mold the at least two thermoplastic polymeric materials to form a blow molded structure having an internal surface and an external surface, wherein the blow molding machine comprises (i) a first head for extruding a first thermoplastic polymer that is to be used as the outer layer, and at least a second head for extruding at least one additional polymer, wherein at least the first head extrudes a homogeneous and gel-free melt of the first thermoplastic polymer; (ii) (a) a mold comprising a first cooling means for cooling the outside of the blow molded structure and (b) a second cooling means for cooling the inside of the blow molded structure as it is blow molded; (iii) a pinch off area and a dual pinching means for pinching off the blow molded structure and obtaining a blow molded structure having a continuous transparent outer layer around the periphery of the container;
(4) blow molding the extruded polymers to form a multilayer blow molded structure; and,
(5) using the first and second cooling means to cool the inside and outside of the blow molded structure to a temperature below 22°C, while forming the blow molded structure.

2. The process of claim 1 wherein only the first and the second thermoplastic polymers are extruded in the process.

3. The process of claim 1 or 2 wherein the second head extrudes a homogeneous and gel-free melt of the second polymer.

4. The process of claim 1 wherein the first cooling means is a cooling system that maintains the mold at a temperature of less than 20°C.

5. The process of claim 1 wherein the second cooling means is a means for discharging cold gas under pressure into the parison, said gas being discharged at a temperature of less than 20°C, preferably less than 18°C.

6. The process of claim 5 wherein the cold gas is discharged at a temperature of less than 15°C, preferably less than 5°C.

7. The process of claim 5, wherein the second cooling means is a blow-pin.

8. The process of claim 7, wherein the blow-pin comprises a cooling jacket over at least 95% of the blow-pin surface, not inclusive of the nozzle.

9. The process of claim 7, wherein the blow-pin further comprises a means for allowing escape of gas from the inside of the blow molded structure.

10. The process of claim 1 wherein the first thermoplastic polymer is a polymer selected from the group consisting of: polyurethanes; acrylic polymers; styrene acrylonitrile (SAN) copolymers; copolymers of ethylene and alpha,beta-unsaturated carboxylic acids, and/or their derivatives; polyamides; and polyvinyl chlorides.

11. The process of claim 10 wherein the first thermoplastic polymer is a copolymer of ethylene and an alpha,beta-unsaturated carboxylic acid.

12. The process of claim 10 wherein the first thermoplastic polymer is an ionomer.

13. The process of claim 1 wherein the process additionally comprises the step of: using the pinching means to pinch off the blow molded structure and obtain a blow molded structure having a continuous transparent outer layer around the periphery of the container wherein the pinched point is flat or tapered slightly toward the inner cavity of the blow molded structure.

14. The process of claim wherein the mold surface is roughened, not polished.

15. A multilayer container obtainable by the process of any of claims 1 to 14, having a transparent outer layer with a thickness ranging from 1.0 mm to 5.0 mm and a distinctness of image (DOI) which is identical or similar to the DOI of glass.

16. The multilayer container of claim 15, wherein the transparent outer layer has a thickness ranging from 1.5 mm to 3.5 mm.

## Patentansprüche

1. Verfahren zur Herstellung eines Mehrschichtbehälters mit einer transparenten äußeren Schicht um die Peripherie des Behälters herum, worin die äußere Schicht ein klares thermoplastisches Polymermaterial umfasst, das im festen Zustand transparent ist, und mindestens einer anderen inneren Schicht, und worin die transparente äußere Schicht eine Dicke aufweist, die im Bereich von 1,0 mm bis 5,0 mm liegt, wobei das Verfahren die folgenden Schritte umfasst:
(1) Erhitzen eines jeden von mindestens zwei thermoplastischen Polymeren auf eine Temperatur über der Schmelztemperatur von jedem, um eine Schmelze von jedem der mindestens zwei Polymere zu erhalten;
(2) Coextrudieren der mindestens zwei thermoplastischen Polymere durch einen Coextrusionsblasformkopf in ein offenes Formwerkzeug;
(3) Verwendung einer Extrusionsblasformmaschine zum Blasformen der mindestens zwei thermoplastischen Polymermaterialien zur Bildung einer blasgeformten Struktur mit einer internen Oberfläche und einer externen Oberfläche, worin die Blasformmaschine Folgendes umfasst: (i) einen ersten Kopf zum Extrudieren eines ersten thermoplastischen Polymers, das als die äußere Schicht verwendet werden soll, und mindestens einen zweiten Kopf zum Extrudieren von mindestens einem zusätzlichen Polymer, worin mindestens der erste Kopf eine homogene und gelfreie Schmelze von dem ersten thermoplastischen Polymer extrudiert; (ii) (a) ein Formwerkzeug, das ein erstes Kühlmittel zum Kühlen der Außenseite der blasgeformten Struktur umfasst, und (b) ein zweites Kühlmittel zum Kühlen der Innenseite der blasgeformten Struktur, wenn sie blasgeformt wird; (iii) einen Abquetschbereich und ein Doppelabquetschmittel zum Abquetschen der blasgeformten Struktur und Erhalt einer blasgeformten Struktur mit einer kontinuierlichen transparenten äußeren Schicht um die Peripherie des Behälters herum;
(4) Blasformen der extrudierten Polymere zum Bilden einer blasgeformten Mehrschichtstruktur; und
(5) Verwendung des ersten und zweiten Kühlmittels zum Kühlen der Innen- und Außenseite der blasgeformten Struktur auf eine Temperatur unter 22°C, während des Bildens der blasgeformten Struktur.

2. Verfahren nach Anspruch 1, worin nur die ersten und die zweiten thermoplastischen Polymere in dem Verfahren extrudiert werden.

3. Verfahren nach Anspruch 1 oder 2, worin der zweite Kopf eine homogene und gelfreie Schmelze von dem zweiten Polymer extrudiert.

4. Verfahren nach Anspruch 1, worin das erste Kühlmittel ein Kühlsystem darstellt, das das Formwerkzeug bei einer Temperatur von weniger als 20°C aufrechterhält.

5. Verfahren nach Anspruch 1, worin das zweite Kühlmittel ein Mittel zur Abgabe eines Kaltgases unter Druck in den Blasrohling darstellt, wobei das Gas bei einer Temperatur von weniger als 20°C, bevorzugt weniger als 18°C abgegeben wird.

6. Verfahren nach Anspruch 5, worin das Kaltgas bei einer Temperatur von weniger als 15°C, bevorzugt weniger als 5°C abgelassen wird.

7. Verfahren nach Anspruch 5, worin das zweite Kühlmittel einen Blasdorn darstellt.

8. Verfahren nach Anspruch 7, worin der Blasdorn einen Kühlmantel über mindestens 95 % der Oberfläche des Blasdorns, nicht einschließlich der Düse, umfasst.

9. Verfahren nach Anspruch 7, worin der Blasdorn ferner ein Mittel umfasst, um das Entweichen von Gas von der Innenseite der blasgeformten Struktur zu ermöglichen.

10. Verfahren nach Anspruch 1, worin das erste thermoplastische Polymer ein Polymer darstellt, das aus der Gruppe ausgewählt ist, bestehend aus: Polyurethanen; Acrylpolymeren; Styrol-Acrylonitril-(SAN)-Copolymeren; Copolymeren von Ethylen und α,β-ungesättigten Carbonsäuren und/oder ihren Derivaten; Polyamiden; und Polyvinylchloriden.

11. Verfahren nach Anspruch 10, worin das erste thermoplastische Polymer ein Copolymer aus Ethylen und einer α,β-ungesättigten Carbonsäure darstellt.

12. Verfahren nach Anspruch 10, worin das erste thermoplastische Polymer ein Ionomer darstellt.

13. Verfahren nach Anspruch 1, worin das Verfahren zusätzlich den folgenden Schritt umfasst: Verwendung des Abquetschmittels zum Abquetschen der blasgeformten Struktur und Erhalt einer blasgeformten Struktur mit einer kontinuierlichen transparenten äußeren Schicht um die Peripherie des Behälters herum, worin der Abquetschpunkt flach oder in Richtung der inneren Kavität der blasgeformten Struktur geringgradig konisch zulaufend ist.

14. Verfahren nach Anspruch 1, worin die Oberfläche des Formwerkzeugs aufgerauht ist, und nicht poliert.

15. Mehrschichtbehälter, erhältlich mithilfe des Verfahrens nach einem der Ansprüche 1 bis 14, der eine transparente äußere Schicht mit einer Dicke im Bereich von 1,0 mm bis 5,0 mm und einem Maß an Brillanz und Glanz (DOI; Distinctness of Image), das mit dem DOI von Glas identisch oder ihm ähnlich ist.

16. Mehrschichtbehälter nach Anspruch 15, worin die transparente äußere Schicht eine Dicke im Bereich von 1,5 mm bis 3,5 mm aufweist.

## Revendications

1. Processus de fabrication d'un contenant multi-couches comportant une couche externe transparente autour de la périphérie du contenant, dans lequel la couche externe comprend un matériau polymère thermoplastique clair qui est transparent à l'état solide, et au moins une autre couche interne, et dans lequel la couche externe transparente a une épaisseur allant de 1,0 mm à 5,0 mm, le processus comprenant les étapes suivantes:
(1) chauffage de chacun des au moins deux polymères thermoplastiques à une température supérieure à la température de fusion de chacun d'eux pour obtenir une fonte de chacun des au moins deux polymères;
(2) coextrusion des au moins deux polymères thermoplastiques à travers une tête de moulage par coextrusion soufflage dans un moule ouvert;
(3) utilisation d'une machine de moulage par coextrusion soufflage pour mouler par soufflage les au moins deux matériaux polymères thermoplastiques pour former une structure moulée par soufflage ayant une surface interne et une surface externe, dans lequel la machine de moulage par soufflage comprend (i) une première tête permettant d'extruder un premier polymère thermoplastique à utiliser comme couche externe, et au moins une deuxième tête permettant d'extruder au moins un autre polymère, dans lequel au moins la première tête extrude une fonte homogène et sans gel du premier polymère thermoplastique; (ii) (a) un moule comprenant un premier moyen de refroidissement permettant de refroidir l'extérieur de la structure moulée par soufflage et (b) un deuxième moyen de refroidissement permettant de refroidir l'intérieur de la structure moulée par soufflage lors du moulage par soufflage; (iii) une zone de pincement et un moyen de pincement dual permettant de pincer la structure moulée par soufflage et d'obtenir une structure moulée par soufflage présentant une couche externe transparente continue autour de la périphérie du contenant;
(4) moulage par soufflage des polymères extrudés pour former une structure moulée par soufflage multi-couches; et,
(5) utilisation des premier et deuxième moyens de refroidissement pour refroidir l'intérieur et l'extérieur de la structure moulée par soufflage à une température inférieure à 22°C, tout en formant la structure moulée par soufflage.

2. Processus selon la revendication 1 dans lequel seuls le premier et le deuxième polymère thermoplastique sont extrudés dans le processus.

3. Processus selon la revendication 1 ou 2, dans lequel la deuxième tête extrude une fonte homogène et sans gel du deuxième polymère.

4. Processus selon la revendication 1, dans lequel le premier moyen de refroidissement est un système de refroidissement qui maintient la fonte à une température de moins de 20°C.

5. Processus selon la revendication 1, dans lequel le deuxième moyen de refroidissement est un moyen permettant de décharger du gaz froid sous pression dans la paraison, ledit gaz étant déchargé à une température de moins de 20°C, de préférence de moins de 18°C.

6. Processus selon la revendication 5, dans lequel le gaz froid est déchargé à une température de moins de 15°C, de préférence de moins de 5°C.

7. Processus selon la revendication 5, dans lequel le deuxième moyen de refroidissement est un mandrin de soufflage.

8. Processus selon la revendication 7, dans lequel le mandrin de soufflage comprend une enveloppe de refroidissement sur au moins 95% de la surface de mandrin de soufflage, sans compter la buse.

9. Processus selon la revendication 7, dans lequel le mandrin de soufflage comprend de plus un moyen permettant l'échappement de gaz de l'intérieur de la structure moulée par soufflage.

10. Processus selon la revendication 1, dans lequel le premier polymère thermoplastique est un polymère sélectionné parmi le groupe constitué des éléments suivants: polyuréthanes; polymères acryliques; copolymères styrène acrylonitrile (SAN); copolymères d'éthylène et d'acides carboxyliques insaturés en alpha, beta, et/ou leurs dérivés; polyamides; et polychlorures de vinyle.

11. Processus selon la revendication 10, dans lequel le premier polymère thermoplastique est un copolymère d'éthylène et d'acide carboxylique insaturé en alpha, beta.

12. Processus selon la revendication 10, dans lequel le premier polymère thermoplastique est un ionomère.

13. Processus selon la revendication 1, dans lequel le processus comprend de plus l'étape suivante: utilisation du moyen de pincement pour pincer la structure moulée par soufflage et obtenir une structure moulée par soufflage ayant une couche externe transparente continue autour de la périphérie du contenant dans lequel le point de pincement est plat ou légèrement effilé vers la cavité interne de la structure moulée par soufflage.

14. Processus selon la revendication 1, dans lequel la surface moulée est rugosifiée, non polie.

15. Contenant multi-couches pouvant être obtenu par le processus selon l'une quelconque des revendications 1 à 14, ayant une couche externe transparente avec une épaisseur allant de 1,0 mm à 5,0 mm et une netteté d'image (DOI) qui est identique ou similaire à la DOI du verre.

16. Contenant multi-couches selon la revendication 15, dans lequel la couche externe transparente a une épaisseur allant de 1,5 mm à 3,5 mm.
